# EUROPEAN PATENT SPECIFICATION

(11) **EP 2 653 565 B1**
(45) Date of publication and mention of the grant of the patent: **13.02.2019**
(21) Application number: 11856543.1
(22) Date of filing: 15.07.2011
(51) Int. Cl.: C21B 5/00, C21B 7/00, C21B 5/06, C21B 7/16

(54) **BLAST FURNACE OPERATION METHOD**
BETRIEBSVERFAHREN FÜR EINEN HOCHOFEN
PROCÉDÉ DE FONCTIONNEMENT DE HAUT-FOURNEAU

(30) Priority: 18.01.2011 JP 2011007949; 08.07.2011 JP 2011152078
(43) Date of publication of application: 23.10.2013
(73) Proprietor: JFE Steel Corporation, Tokyo 100-0011 (JP)
(72) Inventor: MURAO, Akinori, Tokyo 100-0011 (JP); FUJIWARA, Daiki, Tokyo 100-0011 (JP); WATAKABE, Shiro, Tokyo 100-0011 (JP); KITAHARA, Masayuki, Tokyo 100-0011 (JP)
(74) Representative: Hoffmann Eitle
(86) International application number: PCT/JP2011/066777
(87) International publication number: WO 2012/098714

(56) References cited:
- JP-A- 1 268 809
- JP-A- 11 092 809
- JP-A- 11 092 809
- JP-A- 62 142 706
- JP-A- 62 142 706
- JP-A- 2001 200 308
- JP-A- 2001 200 308
- JP-A- 2003 231 905
- JP-A- 2006 152 434
- JP-A- 2006 233 332
- JP-A- 2006 233 332

## Description

### [Technical Field]

The present invention relates to a method for operating a blast furnace in which the combustion temperature is increased by injecting solid reducing agents such as pulverized coal and inflammable reducing agents such as an LNG (Liquefied Natural Gas) and a utility gas into the blast furnace through tuyeres thereof in order to improve productivity and decrease the specific consumption of reducing agents.

### [Background Art]

Nowadays, since there is a problem of global warming due to an increase in the amount of emitted carbon dioxide, it is an important problem also for the steel making industry to suppress the emission of CO₂. In view of this situation, in recent operation of blast furnaces, operation with a low reducing agent rate (low RAR: the abbreviation of Reducing Agent Rate which means the total amount required to produce 1 ton of pig iron of reducing agents which are injected into a blast furnace through tuyeres and coke charged through the furnace top) is being strongly promoted. Since, as reducing agents in a blast furnace, coke which is a solid reducing agent charged through the furnace top and pulverized coal which is a solid reducing agent injected into the furnace through tuyeres are mainly used, it is an effective measure to replace the solid reducing agents such as coke and pulverized coal with reducing agents having a high hydrogen content such as waste plastic, a utility gas and crude oil in order to achieve not only a low reducing agent rate but also the suppression of the emission of carbon dioxide. Patent Literature 1 described below proposes a method in which a double tube is used as a lance with which reducing agents are injected through a tuyere, and in which an LNG is injected through the inner tube of the double tube lance and pulverized coal is injected through the outer tube of the double tube lance. The double tube lance is mentioned as a double wall lance. In addition, Patent Literature 2 described below proposes a method in which a double tube is similarly used as a lance with which reducing agents are injected through a tuyere, and in which pulverized coal is injected through the inner tube of the double tube lance and an LNG is injected through the outer tube of the double tube lance.

### [Citation List]

### [Patent Literature]

[PTL 1] Japanese Patent No. 3176680
[PTL 2] Japanese Examined Patent Application
   Publication No. 1-29847

Further related prior art may be found in JP 11 092809 A being directed to an injection of pulverized fine coal in a blast furnace and JP 2003 231905 A describing a method and apparatus for blowing a large amount of fuel into a blast furnace.

### [Summary of Invention]

### [Technical Problem]

Although the methods for operating a blast furnace according to Patent Literatures 1 and 2 above are more effective for improving combustion temperature and for the reduction of the specific consumption of reducing agents than a conventional method in which only pulverized coal is injected through tuyeres, there is room for further improvement.

The present invention has been completed in view of the problems described above, and an object of the present invention is to provide a method for operating a blast furnace in which further improvement in combustion temperature and further reduction of the specific consumption of reducing agents are possible.

### [Solution to Problem]

The present invention is defined by the appended independent claim. The dependent claims describe optional features and preferred embodiments.

In order to solve the problems described above, a method for operating a blast furnace according to the present invention is characterized in that a triple tube lance (which is mentioned as a triple wall lance) is used as a lance through which reducing agents are injected into the blast furnace via a tuyere, where the inside of the
innermost tube of the triple tube lance is called an inner tube lance, the space between the innermost tube and the second tube from inside is called an intermediate tube lance and the space between the second tube from inside and the outermost tube is called an outer tube lance, and in that all of a solid reducing agent, an inflammable reducing agent and a combustion improving gas are injected into the blast furnace through the triple tube lance so that each of these is separately injected through any one of the inner tube lance, the intermediate tube lance and the outer tube lance.

In addition, in the method for operating a blast furnace described above, it is preferable that any one of the solid reducing agent and the inflammable or combustible reducing agent be injected through the outer tube lance. In addition, in the method for operating a blast furnace described above, it is preferable that each of the inflammable or combustible reducing agent and the combustion improving gas be injected through any one of the two tubes which are adjacent to each other. In addition, in the method for operating a blast furnace described above, it is preferable that the inflammable or combustible reducing agent and the combustion improving gas be injected through any one of the inner tube lance and the intermediate tube lance In addition, in the method for operating a blast furnace described above, it is preferable that the solid reducing agent, the inflammable reducing agent and combustion improving gas are injected into the blast furnace in any one of the following embodiments:
(A) The solid reducing agent is injected through the outer tube lance, the combustion improving gas is injected through the intermediate tube lance and the inflammable reducing agent is injected through the inner tube lance.
(B) The solid reducing agent is injected through the outer tube lance, the inflammable reducing agent is injected through the intermediate tube lance and the combustion improving gas is injected through the inner tube lance.
(C) The inflammable reducing agent is injected through the outer tube lance, the combustion improving gas is injected through the intermediate tube lance and the solid reducing agent is injected through the inner tube lance.
(D) The inflammable reducing agent is injected through the outer tube lance, the solid reducing agent is injected through the intermediate tube lance and the combustion improving gas is injected through the inner tube lance.
(E) The combustion improving gas is injected through the outer tube lance, the inflammable reducing agent is injected through the intermediate tube lance and the solid reducing agent is injected through the inner tube lance.
(F) The combustion improving gas is injected through the outer tube lance, the solid reducing agent is injected through the intermediate tube lance and the inflammable reducing agent is injected through the inner tube lance.

In addition, in the method according to the present invention for operating a blast furnace described above, a ratio of the amount of the inflammable reducing agent or the inflammable reducing agent and the combustion improving gas to the total amount of the gases which are injected through the triple tube lance be from 50 volume% to 95 volume%.

In addition, in the method for operating a blast furnace described above, it is preferable that oxygen or oxygen-enriched air be used as the combustion improving gas which is injected through any one of the inner tube lance, the intermediate tube lance and the outer tube lance and that some of the oxygen to be added to a injected air be injected through any one of the inner tube lance, the intermediate tube lance and the outer tube lance of the triple tube lance.

In addition, in the method for operating a blast furnace described above, oxygen-enriched air be used as the combustion improving gas which is injected through any one of the inner tube lance, the intermediate tube lance and the outer tube lance and that some of the oxygen to be added to a injected air be injected through any one of the inner tube lance, the intermediate tube lance and the outer tube lance.

In addition, it is preferable that pulverized coal be used as the solid reducing agent.

In addition, it is preferable that the amount of the solid reducing agent in the range from 50 kg to 300 kg per 1 ton of pig iron be injected into the blast furnace. It is more preferable that the amount of the solid reducing agent in the range from 60 kg to 180 kg per 1 ton of pig iron be injected into the blast furnace.

In addition, it is preferable that the pulverized coal as the solid reducing agent be mixed with waste plastic, refused derived fuel, organic resources or waste materials.

In addition, it is preferable that the solid reducing agent be mixed with waste plastic, refused derived fuel, organic resources or waste materials while the content of pulverized coal in the solid reducing agent is set to be 80 mass% or more.

In addition, it is preferable that a utility gas, a natural gas, propane gas, hydrogen, a converter gas, a blast furnace gas and a coke oven gas be used as the inflammable reducing agent.

In addition, it is preferable that the inflammable reducing agent be injected into the blast furnace in an amount in the range from 1 kg to 50 kg per 1 ton of pig iron. It is more preferable that the inflammable reducing agent be injected into the blast furnace in an amount in the range from 10 kg to 35 kg per 1 ton of pig iron.

In addition, it is preferable that the total flow rate of the gases which are injected through the outer tube lance of the triple tube lance be set to be from 85 Nm³/h to 800 Nm³/h and that the flow velocity at the exit of the outer tube lance be set to be from 20 m/sec to 120 m/sec.

### [Advantageous Effects of Invention]

As described above, according to the method for operating a blast furnace of the present invention, by using a triple tube lance as a lance through which reducing agents are injected into a blast furnace via a tuyere, by injecting all of a solid reducing agent, an inflammable reducing agent and a combustion improving gas through the triple tube lance so that each of these are separately injected thorough any one of the inner tube lance, the intermediate tube lance and the outer tube lance of the triple tube lance, there is, for example, an explosive diffusion of the solid reducing agent caused by the inflammable reducing agent burning with the combustion improving gas in first and, at the same time, there is a significant increase in the temperature of the solid reducing agent due to the combustion heat of the inflammable reducing agent, which results in an increase in the heating rate of the solid reducing agent and a significant improvement in the combustion temperature of the solid reducing agents, which makes it possible to decrease the specific consumption of the reducing agents.

### [Brief Description of Drawings]

Fig. 1 is the vertical cross-sectional view of a blast furnace illustrating one of the embodiments of the blast furnace to which the method for operating a blast furnace of the present invention is applied.
Fig. 2 is a diagram illustrating combustion state in the case where only pulverized coal is injected through the lance in Fig. 1.
Fig. 3 is a diagram illustrating the combustion mechanism of the pulverized coal in Fig. 2.
Fig. 4 is a diagram illustrating the combustion mechanism in the case where pulverized coal and a utility gas are injected into the blast furnace.
Fig. 5 is a diagram illustrating a combustion test apparatus.
Fig. 6 is a diagram illustrating the results of the combustion tests.
Fig. 7 is a diagram illustrating the combustion temperature in the results of the combustion tests.
Fig. 8 is a diagram illustrating the results of the combustion tests.
Fig. 9 is a diagram illustrating the combustion temperature in the results of the combustion tests.
Fig. 10 is a diagram illustrating the water jacket of a triple tube lance.
Fig. 11 is a diagram illustrating the relationship between the flow rate of the gas which is injected through the outer tube lance of the triple tube lance and the temperature of the surface of the lance.

### [Description of Embodiments]

Subsequently, one of the embodiments of the method for operating a blast furnace of the present invention will be described in reference to the figures.

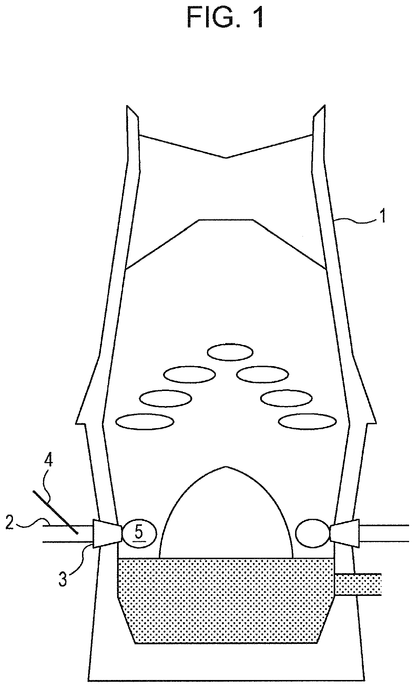

Fig. 1 is the general view of a blast furnace to which the method for operating a blast furnace of the present embodiment is applied. As the figure illustrates, a blow pipe 2 through which hot air is blown is connected to a tuyere 3 of a blast furnace 1, and a lance 4 is installed so that the lance penetrates through the blow pipe 2. There is a combustion space which is called a raceway 5 in a coke heaped layer which exists at the end of the line in the direction in which the hot air is blown through the tuyere 3, and the combustion and gasification of coke take place mainly in this combustion space.

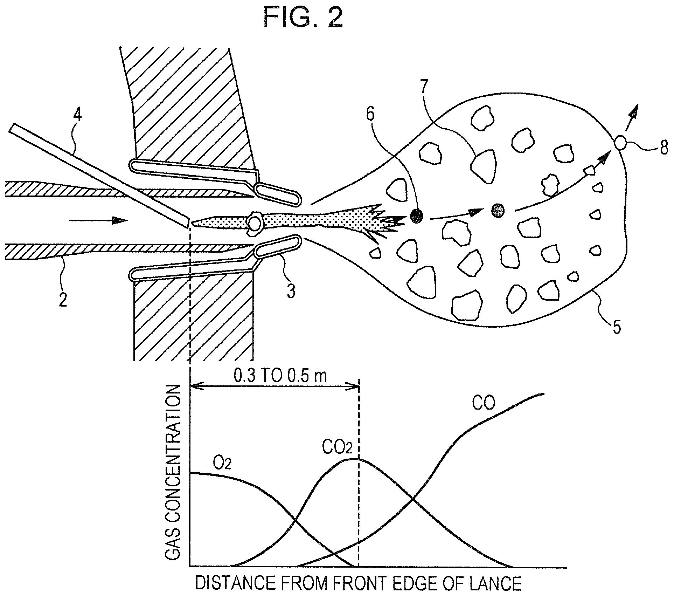

Fig. 2 illustrates combustion state in the case where only pulverized coal 6 which is used as a solid reducing agent is injected through the lance 4. The fixed carbon and the volatile matter of the pulverized coal 6 which is transferred through the lance 4 and the tuyere 3 into the raceway 5 burn with coke 7, and the aggregate of carbon and ash material which is left unburnt and generally called char is discharged from the raceway as unburnt char 8. Since the velocity of the hot air blown through the tuyere 3 at the end of the line in the direction in which the hot air is blown is about 200 m/sec and it is generally believed that the area in which O₂ exists within the area from the front edge of the lance 4 to the inside of the raceway 5 is about from 0.3 m to 0.5 m, it is necessary to improve the heating rate and the contact efficiency (diffusivity) with O₂ of the particles of pulverized coal at a level of substantially 1/1000 second. Incidentally, the mean particle diameter of the pulverized coal which is injected into the blast furnace in practice is from 10 µm to 100 µm.

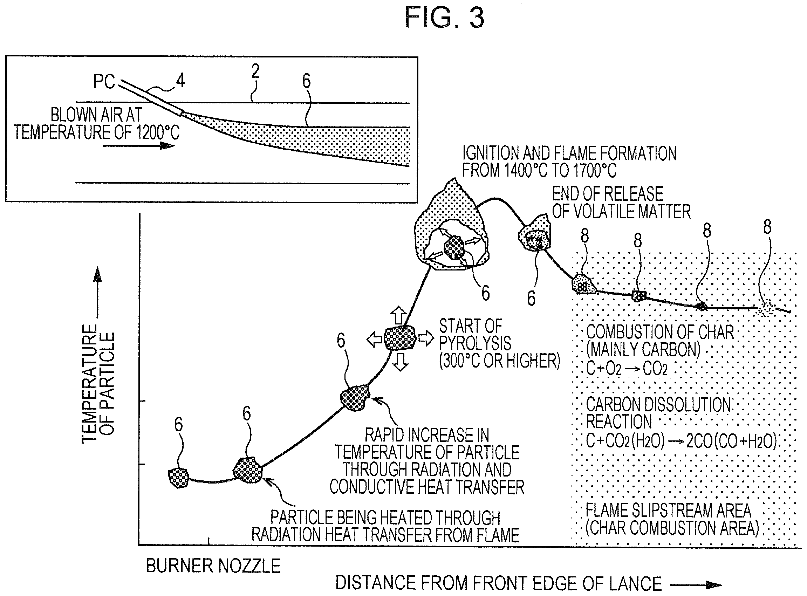

Fig. 3 illustrates the combustion mechanism in the case where only pulverized coal (represented by PC in the figure) 6 is injected through the lance 4 into the blow pipe 2. The particles of the pulverized coal 6 which is injected through the tuyere 3 into the raceway 5 are heated up through radiation heat transfer from flames in the raceway 5, then the temperature of the particles is rapidly increased through radiation heat transfer and conductive heat transfer, the pyrolysis of the particles starts when the temperature of the particles becomes 300°C or higher, flames are formed due to the ignition of volatile matter, and the combustion temperature reaches from 1400°C to 1700°C. The particles from which the volatile matter has been released become the char 8 described above. Since the char 8 mainly consists of fixed carbon, a reaction which is called a carbon dissolution reaction occurs as well as a combustion reaction.

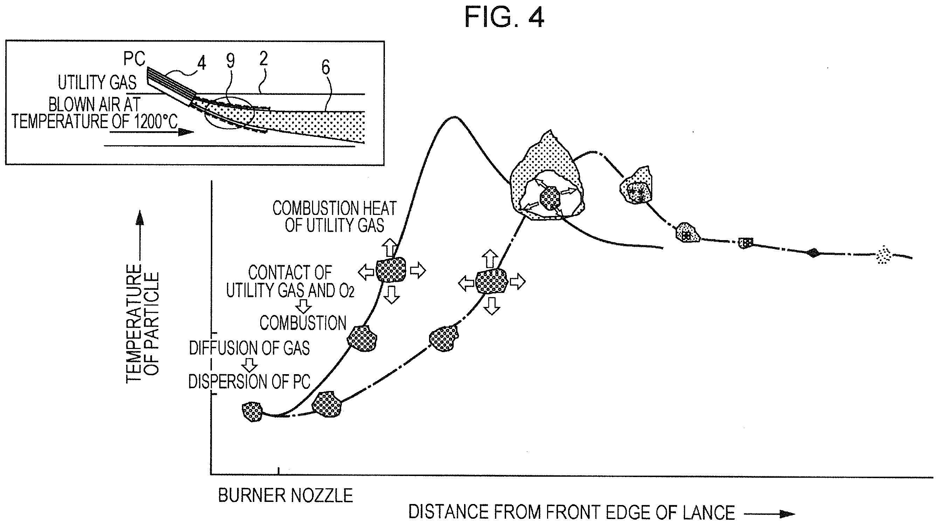

Fig. 4 illustrates the combustion mechanism in the case where a utility gas 9 which is used as an inflammable reducing agent with pulverized coal (represented by PC in the figure) 6 is injected through the lance 4 into the blow pipe 2. The utility gas 9 consists mainly of methane and additionally of ethane, propane, butane and the like. The examples of the composition of a utility gas are given in Table 1 below. The case where the pulverized coal 6 and the utility gas 9 are injected in parallel with each other is illustrated in the figure. Here, the dashed line in the figure represents, for reference, the combustion temperature in the case where only pulverized coal is injected as illustrated in Fig. 3. In the case where pulverized coal and a utility gas are injected at the same time as described above, it is thought that utility gas which is a gaseous matter preferentially burns, and pulverized coal is rapidly heated and the temperature of the pulverized coal rapidly increases due to the combustion heat of the utility gas, which results in there being a further increase in combustion temperature at positions near to the lance.

**[Table 1]**

| | CH₄ Methane | C₂H₆ Ethane | C₃H₈ Propane | C₄H₁₀ Butane | C₅H₁₂ Pentane | C₆H₁₄ Hexane |
|---|---|---|---|---|---|---|
| Utility Gas A | 89.6 | 5.62 | 3.43 | 1.35 | 0 | 0 |
| Utility Gas B | 89.31 | 5.25 | 1.89 | 0.9 | 0.24 | 0.12 |
| Mean | 89.46 | 5.44 | 2.66 | 1.13 | 0.12 | 0.06 |

| | Carbon Dioxide | Oxygen | Nitrogen | Total | | |
|---|---|---|---|---|---|---|
| Utility Gas A | 0 | 0 | 0 | 100.0 | | |
| Utility Gas B | 0 | 0 | 2.29 | 100.0 | | |
| Mean | 0.0 | 0.0 | 1.15 | 100.0 | | |

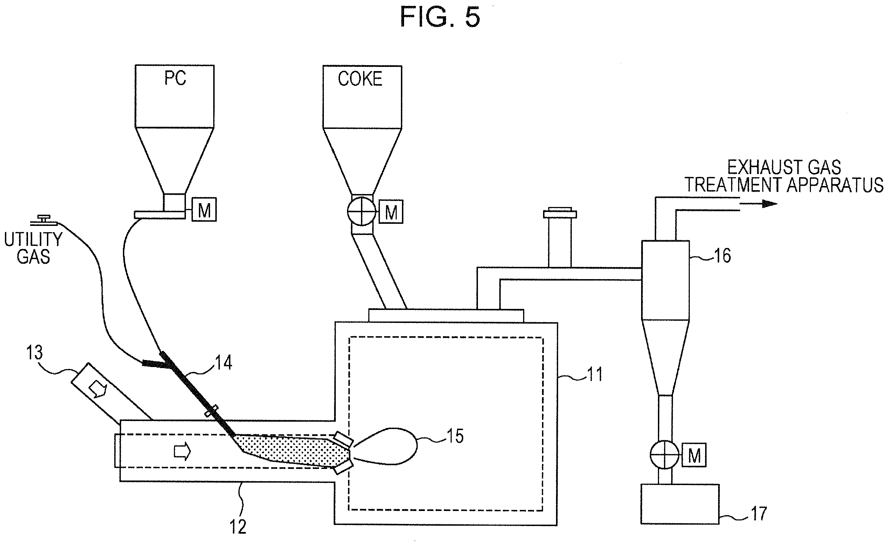

On the basis of the knowledge described above, combustion tests were carried out using a combustion test apparatus illustrated in Fig. 5. Coke was packed in a test furnace 11 in order to simulate conditions in a blast furnace, the inside of a raceway 15 could be observed through an observation window. A lance 14 was inserted into a blow pipe 12, through which hot air which was generated by using a combustion burner 13 can be injected into the test furnace 11 at a specified blow rate. In addition, it was possible to adjust the amount of oxygen added to the injected air with this blow pipe 12. Any one of the pulverized coal and the utility gas or both of them could be injected into the blow pipe 12 through the lance 14. An exhaust gas which was generated in the test furnace 11 was separated into an exhaust gas and dust by using a separating apparatus 16 called a cyclone, and the exhaust gas was transferred to an exhaust gas treatment apparatus such as an auxiliary combustion furnace and the dust was collected in a collection box 17.

The first combustion tests were carried out using the two kinds of lances, a single tube lance and a double tube lance as a lance 14. By using a two-color thermometer through an observation window, the combustion temperature, the combustion position, the combustion state of unburnt char and diffusivity were observed in the case where only pulverized coal was injected through a single tube lance, in the case where, by using a double tube lance, pulverized coal was injected through the inner tube of the double tube lance while a utility gas which was used as an inflammable reducing agent was injected through the outer tube of the double tube lance, and in the case where a utility gas which was used as an inflammable reducing agent was injected through the inner tube of the double tube lance while pulverized coal was injected through the outer tube of the double tube lance. A two-color thermometer is, as well known, a radiation thermometer with which temperature is observed through use of thermal radiation (the transfer of an electromagnetic wave from a body of a high temperature to a body of a low temperature), a wavelength distribution meter with which a temperature is derived by observing the change in wavelength distribution with a temperature focusing on the fact that the wavelength distribution shifts to the side of the shorter wavelength with an increase in temperature, and, in particular, a thermometer with which a temperature is determined by the ratio of two radiation energies, the radiation energies corresponding to two wavelengths being observed in order to detect a wavelength distribution. The combustion state of unburnt char was evaluated by observing the porosity of char which had been collected with a probe at positions 150 mm and 300 mm from the front edge of the lance 14 in the blow pipe 12 of the test furnace 11, embedded in resin, polished and subjected to image analysis.

The specifications of the pulverized coal were as follows: fixed carbon (FC: Fixed Carbon); 77.8%, volatile matter (VM: volatile Matter); 13.6%, ash material (Ash); 8.6% and injecting condition; 29.8 kg/h (corresponding to 100 kg per 1 ton of pig iron) (using nitrogen as a carrier gas). In addition, the injecting condition of the utility gas was 3.6 kg/h (5 Nm³/h, corresponding to 10 kg per 1 ton of pig ion). The blowing conditions of the hot air were as follows: blown air temperature; 1200°C, flow rate; 300 Nm³/h, flow velocity; 70 m/s and amount of O₂ added; +5.5 (oxygen concentration; 26.5%, that is, increasing oxygen concentration by 5.5% from the oxygen concentration in the air of 21%).

The test results were evaluated by using the combustion temperature, the combustion position, the combustion state of unburnt char and diffusivity (mainly of pulverized coal) in the case where only pulverized coal was injected (using N₂ as a carrier gas) through a single tube lance as a standard. The case where pulverized coal was injected through the inner tube of a double tube lance while a utility gas was injected through the outer tube, and the case where a utility gas was injected through the inner tube of the double tube lance while pulverized coal was injected through the outer tube were evaluated. The evaluation results were represented as follows: Δ; equivalent to the case where only pulverized coal was injected, ○; improved a little, ⊙; significantly improved.

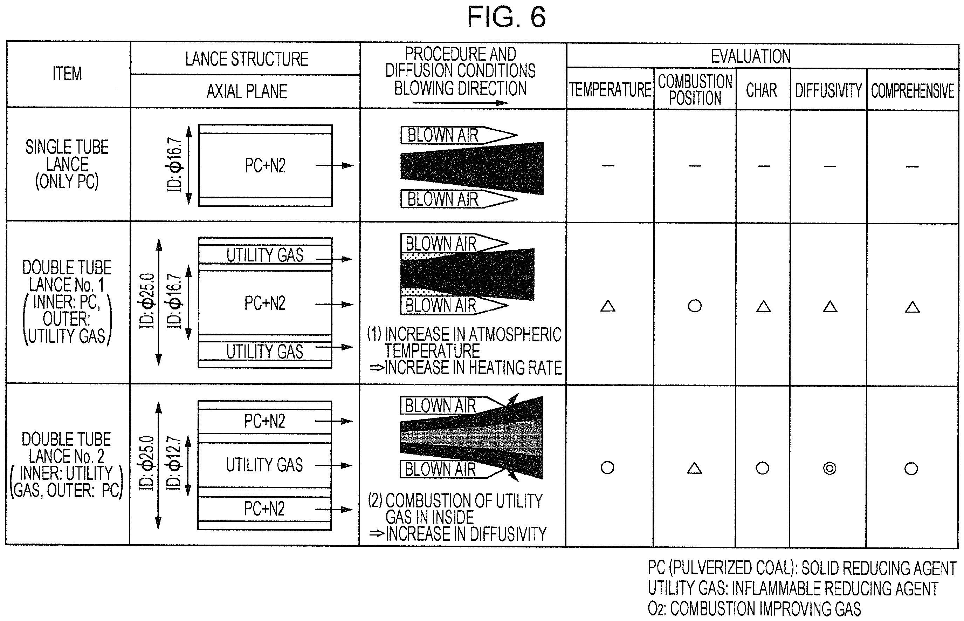

Fig. 6 illustrates the combustion test results described above. Pulverized coal (PC in the figure) was injected with a carrier gas (nitrogen gas N₂ was used). As the figure indicates, it is clarified that in the case where pulverized coal as a solid reducing agent was injected through the inner tube of the double tube lance while a utility gas as an inflammable reducing agent was injected through the outer tube, although improvement in combustion position is recognized, no change is recognized regarding other items. This is thought to be because, although there was an increase in the heating rate of the pulverized coal due to the combustion heat of the utility gas which existed on the outside of the pulverized coal, which contacted O₂ earlier than the pulverized coal did and which quickly burned, since O₂ was expended in the combustion of the utility gas and there was a decrease in the amount of O₂ which was necessary for the combustion of the pulverized coal, a sufficient increase in combustion temperature could not be achieved and the combustion state of unburnt char could not be improved. On the other hand, in the case where a utility gas was injected through the inner tube of the double tube lance while pulverized coal was injected through the outer tube, although improvement in combustion temperature and the combustion state of unburnt char was recognized and significant improvement in diffusivity was recognized, no change in combustion position was recognized. This is thought to be because, although the diffusion of O₂ through the pulverized coal area which existed in the outer area into the utility gas which existed in the inner area took a long time, since explosive diffusion occurred due to the combustion of the inflammable utility gas which existed in the inner area, there was an increase in the combustion temperature of the pulverized coal which was heated by the combustion heat of the utility gas and the combustion state of unburnt char were improved.

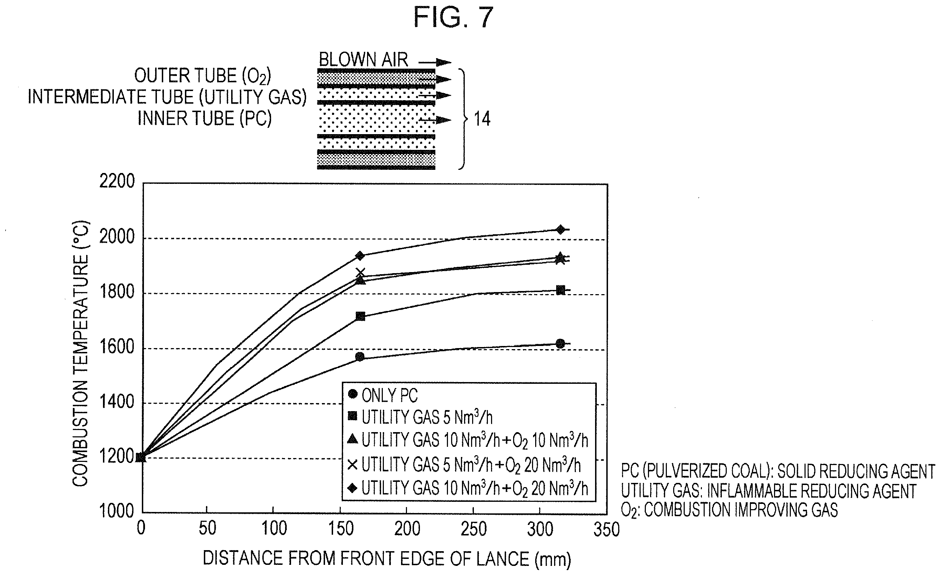

The present inventors, on the basis of the test results described above, investigated change in combustion temperature, as shown in Fig. 7, by using a triple tube lance as the lance 14 in the test furnace 11 described above, where the inside of the innermost tube of the triple tube lance was called an inner tube lance, the space between the innermost tube and the second tube from inside was called an intermediate tube lance and the space between the second tube from inside and the outermost tube was called an outer tube lance, by injecting pulverized coal which was used as a solid reducing agent through the inner tube lance, by injecting utility gas which was used as an inflammable reducing agent through the intermediate tube lance and by injecting oxygen (hereinafter, referred to as O₂) which was used as a combustion improving gas through the outer tube lance, while the amounts of the injected utility gas and O₂ were varied, that is, an oxygen excess ratio was varied.

The specifications of the pulverized coal were as follows: fixed carbon FC; 77.2%, volatile matter VM; 12.2%, ash material Ash; 10.6% and injecting condition; 50 kg/h (corresponding to 142 kg per 1 ton of pig iron, using nitrogen as a carrier gas). In addition, the injecting condition of the utility gas was 5 Nm³/h, corresponding to 10 kg per 1 ton of pig iron, or 10 Nm³/h, corresponding to 20 kg per 1 ton of pig iron. The blowing conditions of the hot air were as follows: blown air temperature; 1200°C, flow rate; 350 Nm³/h and amount of O₂ added; +3.5 (oxygen concentration; 24.5%). Here, in the case where O₂ was injected as a combustion improving gas, some of the oxygen to be added to the injected air was used so that the total amount of O₂ which was blown into the furnace was kept unchanged. In addition, air may be used as a combustion improving gas other than O₂. It is preferable that, in the case where air is used, oxygen-enriched air in which oxygen content is increased by 2% or more, more preferably 10% or more, be used in order to increase a combustion improving effect.

Fig. 7 illustrates the combustion temperature in the test results. As the figure illustrates, it is clarified that the combustion temperature increases with an increase in the amounts of injected utility gas and O₂. One of the advantageous contributions to this is thought be that, by injecting the utility gas and O₂ through the tube lances which are adjacent to each other, the utility gas which is a gaseous body is burnt preferentially and that the temperature of the pulverized coal was rapidly increased due to the combustion heat of the utility gas.

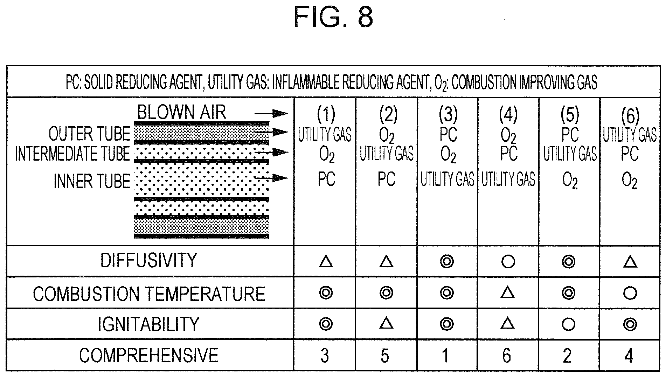

Therefore, tests were conducted in order to investigate, in particular, diffusivity, the combustion temperature and ignitability under the similar test conditions to those given in Fig. 6 described above while the kind of material which was injected through each of the tube lances of a triple tube lance is changed. Fig. 8 illustrates the evaluation of the results of the tests. The case where only pulverized coal was injected through a single tube lance is used as a standard and the evaluation results were represented as follows: Δ; equivalent to the case of only pulverized coal being injected, ○; improved a little, ⊙; significantly improved.

As the figure illustrates, it is clarified that, by injecting pulverized coal which is used as a solid reducing agent or a utility gas which is an inflammable reducing agent through the outer tube lance, the pulverized coal or the utility gas tends to be exposed to the blown air of a high temperature, which results in an increase in the ignitability of the reducing agents. In addition, by injecting the utility gas which is used as an inflammable reducing agent and O₂ which is used as a combustion improving gas through the tube lances which are adjacent to each other, there is a significant increase in the temperature of the pulverized coal which is used as a solid reducing agent due to O₂ and the utility gas burning in first, which results in a significant increase in combustion temperature due to an increase in the heating rate of the pulverized coal. In addition, by injecting the utility gas which is used as an inflammable reducing agent and O₂ which is used as a combustion improving gas through any one of the inner tube lance and the intermediate tube lance, there is an explosive diffusion of the pulverized coal which is used as a solid reducing agent due to the O₂ and the utility gas burning in first and, at the same time, there is a significant increase in the temperature of the pulverized coal due to the combustion heat of the utility gas, which results in a significant improvement in the combustion temperature due to an increase in the heating rate of the pulverized coal. Improvement in combustion temperature is an idication of an increase in combustion amount, and there is a decrease in the amount of heaped fine powdery material (the amount of powdery material fed into a furnace) at a tip part of a tuyere due to an increase in the combustion amount of solid reducing agents which are injected into the blast furnace, which results in improvement in gas permeability in the furnace. In the case where heat balance is appropriate, it is possible to decrease the amount of charged coke (coke ratio) by an amount corresponding to the improvement in gas permeability, which results in a decrease in the specific consumption of reducing agents.

Subsequently, the present inventors observed the change in combustion temperature while varying the ratio of the amount of a utility gas which is an inflammable reducing agent or a utility gas and O₂ which is a combustion improving gas to the total amount of gases which were injected through the triple tube lance 4. This was done in order to confirm the effect of the temperature of pulverized coal being rapidly increased due to the combustion heat which is generated, for example, when the utility gas burns with O₂ in first as described above. Therefore, in CASE 7 through CASE 11 as given in Table 2 below, the combustion temperatures were observed at positions 165 mm and 315 mm from the front edge of a triple tube lance while the flow rate of N₂ which was a carrier gas of the pulverized coal was constantly kept at 15 Nm³/h and the flow rate of the utility gas or the utility gas and O₂ was varied. Air may be used as a carrier gas other than N₂.

**[Table 2]**

| CASE | Carrier Gas (N₂) | O₂ + Utility Gas | O₂/Utility Gas |
|---|---|---|---|
| | Nm³/h | Nm³/h | - |
| 7 | 15 | 0 | - |
| 8 | 15 | 5 | 0 |
| 9 | 15 | 15 | 2 |
| 10 | 15 | 25 | 4 |
| 11 | 15 | 30 | 2 |

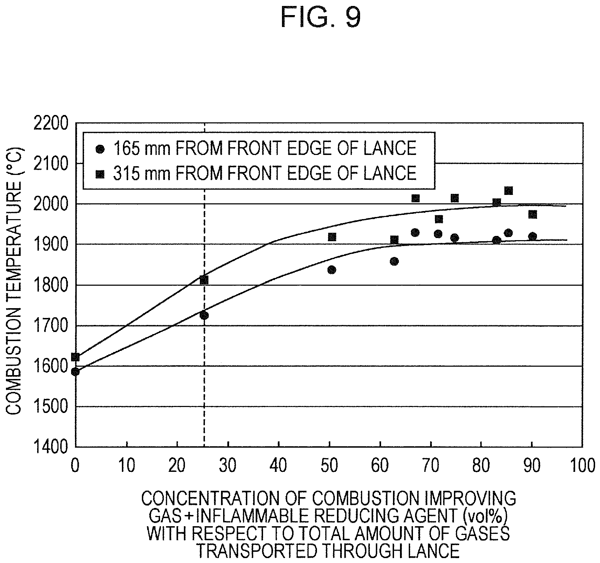

The flow rate of a utility gas or a utility gas and O₂ (O₂ + a utility gas) and the ratio of O₂ to a utility gas (O₂ / a utility gas) are given in the table. That is to say, neither O₂ nor a utility gas is injected in CASE 7. 5 Nm³/h of utility gas only is injected in CASE 8. 5 Nm³/h of utility gas and 10 Nm³/h of O₂ are injected in CASE 9. 5 Nm³/h of utility gas and 20 Nm³/h of O₂ are injected in CASE 10. 10 Nm³/h of utility gas and 20 Nm³/h of O₂ are injected in CASE 11. In addition, the ratio of the amount of a utility gas or a utility gas and O₂ to the total amount of the gases which are injected through a triple tube lance is 0 volume% in CASE 7, 25 volume% in CASE 8, 50 volume% in CASE 9, 62.5 volume% in CASE 10 and 66.7 volume% in CASE 11. The specifications of the pulverized coal, the blowing conditions of the hot air and the injecting method of the pulverized coal, the utility gas and O₂ were similar to those in the case of Fig. 7 illustrated above. Fig. 9 illustrates the observation results.

As the figure illustrates, it is clarified that, since, in the region in which the ratio of the amount of the utility gas or the utility gas and O₂ to the total amount of the gases which are injected through the triple tube lance is less than 25 volume%, the combustion temperature significantly increases with an increase in the ratio of the amount of the utility gas or the utility gas and O₂ to the total amount of the gases, it is difficult to achieve a high combustion temperature in this region. On the other hand, since, in the region in which the ratio of the amount of the utility gas or the utility gas and O₂ to the total amount of the gases which are injected through the triple tube lance is 25 volume% or more, an increase in combustion temperature tends to saturate even if the ratio of the amount of the utility gas or the utility gas and O₂ to the total amount of the gases increases, it is possible to achieve a high combustion temperature in this region. Therefore, in the method for operating a blast furnace of the present embodiment, the ratio of the amount of an inflammable reducing agent or an inflammable reducing agent and a combustion improving gas to the total amount of gases which are injected through a triple tube lance, that is, the ratio of a utility gas or a utility gas and O₂ is set to be 25 volume% or more, preferably 50 volume% or more. In addition, since, in the case where the ratio of the amount of the utility gas or the utility gas and O₂ to the total amount of the gases which are injected through the triple tube lance is more than 95 volume%, an increase in combustion temperature tends to saturate, the upper limit of the ratio is set to be 95 volume% or less. In addition, although a utility gas is an example of an inflammable reducing agent, a natural gas (LNG), which mainly consists of methane and is equivalent to a utility gas as indicated in Table 3, may also be used.

**[Table 3]**

| Production Area | CH₄ Methane | C₂H₆ Ethane | C₃H₈ Propane | C₄H₁₀ Butane | C₅H₁₂ Pentane | Nitrogen | Total |
|---|---|---|---|---|---|---|---|
| Natural Gas A Alaska | 99.81 | 0.07 | 0 | 0 | 0 | 0.12 | 100.0 |
| Natural Gas B Brunei | 89.83 | 5.89 | 2.92 | 1.3 | 0.04 | 0.02 | 100.0 |
| Natural Gas C Abu Dhabi | 82.07 | 15.86 | 1.86 | 0.13 | 0 | 0.05 | 100.0 |
| Mean | 90.570 | 7.273 | 1.593 | 0.477 | 0.013 | 0.063 | 100.0 |

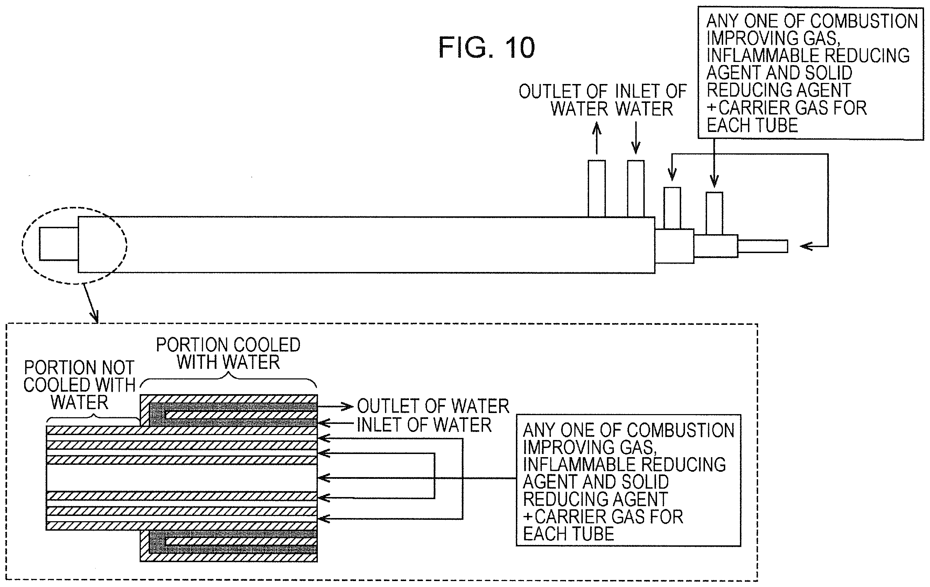

Incidentally, the outer tube lance of the triple tube lance tends to be exposed to an atmosphere of a high temperature when the combustion temperature increases as described above. The triple tube lance consists of, for example, stainless steel tubes. Although it is needless to say that the outer tube lance of the triple tube lance is cooled with a water cooling system such as so-called a water jacket, the jacket cannot reach the front edge of the lance. Fig. 10 illustrates the conditions of the water jacket of the triple tube lance.

It was found that the front edge portion of the outer tube lance of a triple tube lance which, in particular, water cooling cannot reach as illustrated in Fig. 10 is deformed due to heat. In the case where the outer tube lance of a triple tube lance is deformed, that is, bent, it is impossible to blow pulverized coal, a utility gas or O₂ into a required position and there is difficulty in replacement of the lance which is an expendable item. In addition, it is also thought that the flow of pulverized coal is changed due to the bent lance so that the pulverized coal hits a tuyere, and there is concern that the tuyere may be damaged in this case. In the case where the outer tube lance of a triple tube lance is bent, the space between the outer and intermediate tube lances may be closed and gas flow through the outer tube lance may be stopped, and the outer tube lance of the triple tube lance may be damaged due to melting in this case or there may be a case where a blow pipe is broken. In the case where the lance is deformed or worn, it is impossible not only to achieve the combustion temperature described above but also to decrease the specific consumption of reducing agents.

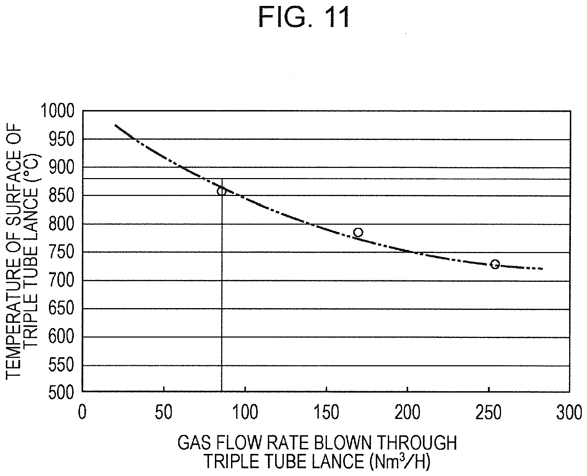

In order to cool the outer tube lance of a triple tube lance which cannot be cooled with water, there is no other way but to dissipate heat through gases which is transferred through the inside of the lance. In the case where the outer tube lance of a triple tube lance is cooled by using the dissipation of heat through the gases which flow inside the lance, it is thought that the flow rate of the gases have an influence on the temperature of the lance. Therefore, the present inventors observed the surface temperature of the lance while the flow rate of the gases which were injected through the outer tube lance of the triple tube lance was varied. The flow rate of the gases was adjusted by adding N₂ which is normally used as a carrier gas of pulverized coal injected through the outer tube lance of the triple tube lance in the present embodiment. Incidentally, a utility gas was injected through the inner tube lance and O₂ was injected through the intermediate tube lance. Fig. 11 illustrates the observation results.

A steel tube called 25A×Schedule160 was used for the inner tube lance of the triple tube lance. A steel tube called 32A×Schedule40 was used for the intermediate tube lance of the triple tube lance. A steel tube called 50A×Schedule80 was used for the outer tube lance of the triple tube lance, and the surface temperature of the lance was observed while the total flow rate of N₂ which is a carrier gas of pulverized coal was varied. Here, "25A", "32A" and "50A" are nominal dimensions for the outer diameters of the steel tubes in accordance with JIS G 3459, and 25A represents an outer diameter of 34.0 mm, 32A represents an outer diameter of 42.7 mm and 50A represents an outer diameter of 60.5 mm. In addition, "Schedule" is a nominal dimension for the thickness of the steel tube in accordance with JIS G 3459, and 25A×Schedule160 represents 6.4 mm, 32A×Schedule40 represents 3.6 mm and 50A×Schedule80 represents 5.5 mm. It is practical to use the steel tubes having the outer diameters and the thicknesses described above in the case where steel tubes are used for the tube lances of the triple tube lance. Incidentally, other than stainless steel tubes, carbon steel may be applied. In this case, the outer diameter of a steel tube is in accordance with JIS G 3452 and the thickness of a steel tube is in accordance with JIS G 3454.

As the figures illustrate with two-dot chain lines, the surface temperature of the lance decreases nearly in inverse proportion to an increase in the total flow rate of the gases which are injected through the outer tube lance of the triple tube lance. In the case where the sizes of the steel tubes are changed, the temperature changes, because the flow velocity of gas changes even with the same total gas flow rate. In the case where steel tubes are used for a triple tube lance, creep deformation occurs when the surface temperature of the the triple tube lance becomes higher than 880°C, which results in the triple tube lance being bent. Therefore, in the case where a steel tube called 50AxSchedule80 is used for the outer tube lance of a triple tube lance and the surface temperature of the triple tube lance is 880°C or lower, the total flow rate of gases injected through the outer tube lance is set to be 85 Nm³/h or more, and the flow velocity at the exit of the outer tube lance of the triple tube lance is set 20 m/sec or more in the case where the above steel tube is used. Then, since, in the case where the total flow rate of the gases injected through the outer tube lance of the triple tube lance is set to be 85 Nm³/h or more and the flow velocity at the exit of the outer tube lance of the triple tube lance is 20 m/sec or more, the surface temperature of the outer tube lance of the triple tube lance becomes 880°C or lower, the triple tube lance is not deformed or bent. On the other hand, since, in the case where the total flow rate of the gases injected through the outer tube lance of the triple tube lance is more than 800 Nm³/h or the flow velocity at the exit is more than 120 m/sec, it is not practical from the viewpoint of operation cost of the apparatus, the upper limit of the total flow rate of the gases injected through the the outer tube lance of the triple tube lance is set to be 800 Nm³/h and the upper limit of the flow velocity at the exit is set to be 120 m/sec. That is to say, in order to cool the outer tube lance of the triple tube lance which cannot be cooled with water, the flow rate of the gases injected through the outer tube lance is set to be adjusted for cooling so that the flow velocity at the exit of the outer tube lance is from 20 m/sec to 120 m/sec.

In this triple tube lance, the deformation (bending) of the triple tube lance is prevented by adjusting the flow rate of the gases which is injected through the outer tube lance of the triple tube lance so that the flow velocity at the exit of the single tube lance is 20 m/sec or more, and, in accordance with this, the amount of solid reducing agents such as pulverized coal which are injected through the triple tube lance is set to be from 50 kg to 300 kg per 1 ton of pig iron. That is to say, since there is a limitation on the lower limit of the amount of materials to be injected through a lance due to facility conditions, it is necessary to take measures such as closing some of tuyeres in the case where a injected reducing agent rate is excessively small, which results in there being a deviation in the circumferential direction due to coexisting of tuyeres through which reducing agents are injected and tuyeres through which reducing agents are not injected, which is not preferable for the steady operation of a blast furnace. Therefore, the amount of solid reducing agents is set to be 50 kg or more per 1 ton of pig iron. In addition, in the case where the injected reducing agent rate of solid reducing agents is excessively small, the relative amount of charged materials which are provided with heat through heat exchange between gases and the charged materials becomes large, which results in a decrease in the temperature of gases at the furnace top. In order to prevent the temperature at the furnace top from becoming equal to a dewpoint or lower, the amount of solid reducing agents is again set to be 50 kg or more per 1 ton of pig iron, preferably 60 kg or more.

Moreover, there is the upper limit on the injected reducing agent rate due to the limitation of gas permeability from the viewpoint of operation with a low reducing agent rate, because a reducing agent rate for a solid reducing agent (coke) which is charged through the furnace top is decreased with an increase in the injected reducing agent rate of solid reducing agents, which results in a decrease in gas permeability, and, in the case where a total pressure loss (blown air pressure - furnace top pressure) exceeds the acceptable limit, it is impossible to decrease the reducing agent rate (for coke) even if the amount of the injected reducing agents is further increased, which results in steady operation being hampered or may result in operation itself becoming impossible. Also in order to protect furnace top devices, the amount of solid reducing agents is set to be 300 kg or less per 1 ton of pig iron, preferably 180 kg or less per 1 ton of pig iron.

In addition, 1 kg or more of inflammable reducing agents such as a utility gas and a natural gas (LNG) per 1 ton of pig iron is necessary from the viewpoint of achieving a high combustion temperature, and the upper limit is set to be 50 kg or less per 1 ton of pig iron in order to protect tuyeres and furnace top devices, preferably from 10 kg to 35 kg per 1 ton of pig iron.

By calculating from the values described above, the ratio of the amount of solid reducing agents to the amount of inflammable reducing agent (by mass%) becomes from 1 to 300, preferably from 1 to 180.

Moreover, oxygen or oxygen-enriched air is used as a combustion improving gas in a triple tube lance, and at least 1 Nm³ or more of this kind of gas per 1 ton of pig iron is necessary in order to achieve the good combustion quality of solid reducing agents and inflammable reducing agents. The upper limit is determined in consideration of manufacturing cost, and it is set to be 80 Nm³ or less per 1 ton of pig iron. Incidentally, the oxygen enrichment ratio of the oxygen-enriched air is set to be 2% or more, preferably 10% or more.

In addition, although the mean particle diameter of pulverized coal in practice is from 10 µm to 100 µm, it is preferable that, in the present invention, the mean particle diameter be from 20 µm to 50 µm in order to achieve a good combustion quality and in consideration of transportation from a lance and feeding to a lance. In the case where the mean particle diameter of pulverized coal is less than 20 µm, although a combustion quality is good, pulverized coal tends to get stuck in a lance when being transported (pneumatic transportation), and there is concern that the combustion quality of pulverized coal may be deteriorated in the case where the mean particle diameter of pulverized coal is more than 50 µm.

In addition, a injected solid reducing agent which mainly consists of pulverized coal and to which waste plastic, refuse derived fuel (RDF), organic resources (biomass) or waste materials are mixed may be used. In the case where the mixture is used, it is preferable that a ratio of the amount of pulverized coal to the total amount of the solid reducing agent be 80 mass% or more. That is to say, since heat quantities which are generated by reaction of waste plastic, refuse derived fuel (RDF), organic resources (biomass), waste materials or the like are different from that generated by pulverized coal, combustion state tend to become uneven in the case where their mixing ratios become close to that of pulverized coal, which tends to result in unsteady operation. In addition, since heat quantities which are generated by combustion reaction of waste plastic, refuse derived fuel (RDF), organic resources (biomass), waste materials or the like are less than that generated by pulverized coal, efficiency at which solid reducing agents which are charged through the furnace top are replaced with the injected solid reducing agents decreases in the case where a large amount of them are used. That is why it is preferable that the content of pulverized coal be 80 mass% or more.

Incidentally, waste plastic, refuse derived fuel (RDF), organic resources (biomass) or waste materials can be used by mixing with pulverized coal by grinding them into fine particles having a diameter of 6 mm or less, preferably 3 mm or less. Regarding a ratio to coal, they can be mixed with pulverized coal by making them join pulverized coal which is being transported with a carrier gas, or they may be used by mixing with pulverized coal in advance.

Moreover, other than a utility gas or natural gas, propane gas, hydrogen and gases generated in a steel works such as a converter gas, a blast furnace gas and a coke oven gas may be used as inflammable reducing agents.

As described above, in the method for operating a blast furnace of the present embodiment, by using a triple tube lance as a lance 4 through which reducing agents are injected into a blast furnace via a tuyere 3, by injecting all of pulverized coal (solid reducing agent) 6, a utility gas (inflammable reducing agent) 9 and O₂ (combustion improving gas) through the triple tube lance so that each of these are separately injected thorough any one of the inner tube lance, the intermediate tube lance and the outer tube lance of the triple tube lance, there is, for example, an explosive diffusion of the pulverized coal (solid reducing agent) 6 caused by the O₂ (combustion improving gas) and the utility gas (inflammable reducing agent) 9 burning in first and, at the same time, there is a significant increase in the temperature of the pulverized coal (solid reducing agent) 6 due to the combustion heat of the utility gas (inflammable reducing agent) 9, which results in an increase in the heating rate of the pulverized coal (solid reducing agent) 6 and a significant improvement in the combustion temperature, which makes it possible to decrease the specific consumption of the reducing agents.

In addition, by injecting the pulverized coal (solid reducing agent) 6 or utility gas (inflammable reducing agent) 9 through the outer tube lance, the pulverized coal (solid reducing agent) 6 or the utility gas (inflammable reducing agent) 9 is tends to be exposed to the atmosphere of a high temperature, which results in improvement in ignitability of the reducing agent.

In addition, by injecting the utility gas (inflammable reducing agent) 9 and O₂ (combustion improving gas) through the tube lances which are adjacent to each other, there is a significant increase in the temperature of the pulverized coal (solid reducing agent) 6 due to O₂ (combustion improving gas) and the utility gas (inflammable reducing agent) 9 burning in first, which results in an increase in the heating rate of the pulverized coal (solid reducing agent) 6 and a significant improvement in the combustion temperature.

In addition, by injecting the utility gas (inflammable reducing agent) 9 and O₂ (combustion improving gas) through any one of the inner tube lance and the intermediate tube lance, there is an explosive diffusion of the pulverized coal (solid reducing agent) 6 due to the O₂ (combustion improving gas) and the utility gas (inflammable reducing agent) 9 burning in first and, at the same time, there is a significant increase in the temperature of the pulverized coal (solid reducing agent) 6 due to the combustion heat of the utility gas (inflammable reducing agent) 9, which results in a significant improvement in the combustion temperature due to an increase in the heating rate of the pulverized coal (solid reducing agent) 6.

In addition, by setting the ratio of the amount of a utility gas (inflammable reducing agent) 9 or a utility gas (inflammable reducing agent) 9 and O₂ (combustion improving gas) with respect to the total amount of gases which are injected through a triple tube lance 4 to be from 25 volume% to 95 volume%, a high combustion temperature can be achieved. In addition, by injecting some of oxygen to be added to a injected air through any one of the tube lances of a triple tube lance 4 as a combustion improving gas, the excessive supply of oxygen can be avoided while gas balance in a blast furnace is maintained.

### [Reference Signs List]

1: blast furnace, 2: blow pipe, 3: tuyere, 4: lance, 5: raceway, 6: pulverized coal (solid reducing agent), 7: coke, 8: char, 9: utility gas (inflammable reducing agent)

## Claims

1. A method for operating a blast furnace, the method comprising:
providing a triple tube lance for injecting reducing agents into the blast furnace via a tuyere;
the triple tube lance comprising an inner tube lance, an intermediate tube lance and an outer tube lance, the triple tube lance having an innermost tube, a second tube and an outermost tube, the inner tube lance being an inside of an innermost tube of the triple tube lance, the intermediate tube lance being a space between the innermost tube and the second tube from inside and the outer tube lance being a space between the second tube from inside and the outermost tube; and
injecting all of a solid reducing agent with a carrier gas, an inflammable reducing agent and a combustion improving gas into the blast furnace through the triple tube lance so that each of these is separately injected through any one of the inner tube lance, the intermediate tube lance and the outer tube lance, **characterized in that**
a ratio of the amount of the inflammable reducing agent or the inflammable reducing agent and the combustion improving gas to the total amount of the gases which are injected through the triple tube lance is from 50 volume% to 95 volume%.

2. The method according to claim 1, wherein
any one of the solid reducing agent and the inflammable reducing agent is injected through the outer tube lance.

3. The method according to claim 1 or 2, wherein
each of the inflammable reducing agent and the combustion improving gas are injected through any one of the two tubes which are adjacent to each other.

4. The method according to any one of claims 1 to 3, wherein
the inflammable reducing agent and the combustion improving gas are injected through any one of the inner tube lance and the intermediate tube lance.

5. The method according to claim 1, wherein
the combustion improving gas is oxygen or oxygen-enriched air and the combustion improving gas is injected through any one of the inner tube lance, the intermediate tube lance and the outer tube lance;
a portion of the oxygen to be added to a hot blast air is injected through any one of the inner tube lance, the intermediate tube lance and the outer tube lance of the triple tube lance.

6. The method according to claim 5, wherein
the combustion improving gas is injected through any one of the inner tube lance, the intermediate tube lance and the outer tube lance, the combustion improving gas is oxygen-enriched air;
a portion of the oxygen to be added to a hot blast air is injected through any one of the inner tube lance, the intermediate tube lance and the outer tube lance.

7. The method according to claim 1, wherein
the solid reducing agent is pulverized coal.

8. The method according to claim 7, wherein
the solid reducing agent is injected into the blast furnace in an amount in the range from 50 kg to 300 kg per 1 ton of pig iron.

9. The method according to claim 8, wherein
the solid reducing agent is injected into the blast furnace in an amount in the range from 60 kg to 180 kg per 1 ton of pig iron.

10. The method according to any one of claims 7 to 9, wherein
waste plastic, refused derived fuel, organic resources or waste materials is mixed with the pulverized coal as the solid reducing agent.

11. The method according to claim 10, wherein
the solid reducing agent is mixed with waste plastic, refused derived fuel, organic resources or waste materials while the content of the pulverized coal as the solid reducing agent is set to be 80 mass% or more.

12. The method according to any one of claims 1 to 11, wherein
the inflammable reducing agent is a utility gas, a natural gas, propane gas, hydrogen, a converter gas, a blast furnace gas and a coke oven gas.

13. The method according to claim 12, wherein
the inflammable reducing agent is injected into the blast furnace in an amount in the range from 1 kg to 50 kg per 1 ton of pig iron.

14. The method according to claim 13, wherein
the inflammable reducing agent is injected into the blast furnace in an amount in the range from 10 kg to 35 kg per 1 ton of pig iron.

15. The method according to any one of claims 1 to 14, wherein
the total flow rate of the gases, which are injected through the outer tube lance of the triple tube lance, is from 85 Nm³/h to 800 Nm³/h, and
the flow velocity at the exit of the outer tube lance is from 20 m/sec to 120 m/sec.

16. The method according to claim 1, wherein
the solid reducing agent is injected through the outer tube lance;
the combustion improving gas is injected through the intermediate tube lance; and
the inflammable reducing agent is injected through the inner tube lance.

17. The method according to claim 1, wherein
the solid reducing agent is injected through the outer tube lance;
the inflammable reducing agent is injected through the intermediate tube lance; and
the combustion improving gas is injected through the inner tube lance.

18. The method according to claim 1, wherein
the inflammable reducing agent is injected through the outer tube lance;
the combustion improving gas is injected through the intermediate tube lance; and
the solid reducing agent is injected through the inner tube lance.

19. The method according to claim 1, wherein
the inflammable reducing agent is injected through the outer tube lance;
the solid reducing agent is injected through the intermediate tube lance; and
the combustion improving gas is injected through the inner tube lance.

20. The method according to claim 1, wherein
the combustion improving gas is injected through the outer tube lance;
the inflammable reducing agent is injected through the intermediate tube lance; and
the solid reducing agent is injected through the inner tube lance.

21. The method according to claim 1, wherein
the combustion improving gas is injected through the outer tube lance;
the solid reducing agent is injected through the intermediate tube lance; and
the inflammable reducing agent is injected through the inner tube lance.

## Patentansprüche

1. Verfahren zum Betreiben eines Hochofens, wobei das Verfahren umfasst:
ein Bereitstellen einer Dreiröhrenlanze zum Einbringen von Reduktionsmitteln in den Hochofen über eine Düse;
wobei die Dreiröhrenlanze eine Innenröhrenlanze, eine Mittelröhrenlanze und eine Außenröhrenlanze aufweist, wobei die Dreiröhrenlanze eine am weitesten innen gelegene Röhre, eine zweite Röhre und eine am weitesten außen gelegene Röhre aufweist, wobei die Innenröhrenlanze ein Inneres einer am weitesten innen gelegenen Röhre der Dreiröhrenlanze ist, die Mittelröhrenlanze ein Raum zwischen der am weitesten innen gelegenen Röhre und der zweiten Röhre von innen ist, und die Außenröhrenlanze ein Raum zwischen der zweiten Röhre von innen und der am weitesten außen gelegenen Röhre ist; und
ein Einbringen einer Gesamtmenge eines festen Reduktionsmittels mit einem Trägergas, eines entflammbaren Reduktionsmittels und eines verbrennungsverbessernden Gases in den Hochofen durch die Dreiröhrenlanze, sodass jedes davon getrennt durch eine der Innenröhrenlanze, der Mittelröhrenlanze und der Außenröhrenlanze eingebracht wird, **dadurch gekennzeichnet, dass**
ein Verhältnis der Menge des entflammbaren Reduktionsmittels oder des entflammbaren Reduktionsmittels und des verbrennungsverbessernden Gases zur Gesamtmenge der Gase, die durch die Dreiröhrenlanze eingebracht werden, von 50 Volumenprozent bis 95 Volumenprozent beträgt.

2. Verfahren nach Anspruch 1, wobei
eins des festen Reduktionsmittels und des entflammbaren Reduktionsmittels durch die Außenröhrenlanze eingebracht wird.

3. Verfahren nach Anspruch 1 oder 2, wobei
jedes des entflammbaren Reduktionsmittels und des verbrennungsverbessernden Gases durch eine der zwei Röhren, die aneinander angrenzen, eingebracht werden.

4. Verfahren nach einem der Ansprüche 1 bis 3, wobei
das entflammbare Reduktionsmittel und das verbrennungsverbessernde Gas durch eine der Innenröhrenlanze und der Mittelröhrenlanze eingebracht werden.

5. Verfahren nach Anspruch 1, wobei
das verbrennungsverbessernde Gas Sauerstoff oder sauerstoffangereicherte Luft ist und das verbrennungsverbessernde Gas durch eine der Innenröhrenlanze, der Mittelröhrenlanze und der Außenröhrenlanze eingebracht wird;
ein Anteil des einer heißen Gebläseluft zuzuführenden Sauerstoffs durch eine der Innenröhrenlanze, der Mittelröhrenlanze und der Außenröhrenlanze der Dreiröhrenlanze eingebracht wird.

6. Verfahren nach Anspruch 5, wobei
das verbrennungsverbessernde Gas durch eine der Innenröhrenlanze, der Mittelröhrenlanze und der Außenröhrenlanze eingebracht wird, das verbrennungsverbessernde Gas sauerstoffangereicherte Luft ist; und
ein Anteil des einer heißen Gebläseluft zuzuführenden Sauerstoffs durch eine der Innenröhrenlanze, der Mittelröhrenlanze und der Außenröhrenlanze eingebracht wird.

7. Verfahren nach Anspruch 1, wobei
das feste Reduktionsmittel pulverisierte Kohle ist.

8. Verfahren nach Anspruch 7, wobei
das feste Reduktionsmittel in einer Menge im Bereich von 50 kg bis 300 kg pro 1 Tonne Roheisen in den Hochofen eingebracht wird.

9. Verfahren nach Anspruch 8, wobei
das feste Reduktionsmittel in einer Menge im Bereich von 60 kg bis 180 kg pro 1 Tonne Roheisen in den Hochofen eingebracht wird.

10. Verfahren nach einem der Ansprüche 7 bis 9, wobei
Kunststoffabfall, Sekundärbrennstoffen, organische Ressourcen oder Abfallmaterialien mit der pulverisierten Kohle als das feste Reduktionsmittel vermischt werden.

11. Verfahren nach Anspruch 10, wobei
das feste Reduktionsmittel mit Kunststoffabfall, Sekundärbrennstoffen, organischen Ressourcen oder Abfallmaterialien gemischt wird, wobei der Anteil der pulverisierten Kohle als das feste Reduktionsmittel auf 80 Massenprozent oder mehr gesetzt ist.

12. Verfahren nach einem der Ansprüche 1 bis 11, wobei
das entflammbare Reduktionsmittel ein Nutzgas, ein Erdgas, Propangas, Wasserstoff, ein Konvertergas, ein Hochofengas oder ein Koksofengas ist.

13. Verfahren nach Anspruch 12, wobei
das entflammbare Reduktionsmittel in einer Menge im Bereich von 1 kg bis 50 kg pro 1 Tonne Roheisen in den Hochofen eingebracht wird.

14. Verfahren nach Anspruch 13, wobei
das entflammbare Reduktionsmittel in einer Menge im Bereich von 10 kg bis 35 kg pro 1 Tonne Roheisen in den Hochofen eingebracht wird.

15. Verfahren nach einem der Ansprüche 1 bis 14, wobei
die gesamte Strömungsrate der Gase, die durch die Außenröhrenlanze der Dreiröhrenlanze eingebracht werden, von 85 Nm³/h bis 800 Nm³/h beträgt und
die Strömungsgeschwindigkeit am Ausgang der Außenröhrenlanze von 20 m/sec bis 120 m/sec beträgt.

16. Verfahren nach Anspruch 1, wobei
das feste Reduktionsmittel durch die Außenröhrenlanze eingebracht wird;
das verbrennungsverbessernde Gas durch die Mittelröhrenlanze eingebracht wird; und
das entflammbare Reduktionsmittel durch die Innenröhrenlanze eingebracht wird.

17. Verfahren nach Anspruch 1, wobei
das feste Reduktionsmittel durch die Außenröhrenlanze eingebracht wird;
das entflammbare Reduktionsmittel durch die Mittelröhrenlanze eingebracht wird; und
das verbrennungsverbessernde Gas durch die Innenröhrenlanze eingebracht wird.

18. Verfahren nach Anspruch 1, wobei
das entflammbare Reduktionsmittel durch die Außenröhrenlanze eingebracht wird;
das verbrennungsverbessernde Gas durch die Mittelröhrenlanze eingebracht wird; und
das feste Reduktionsmittel durch die Innenröhrenlanze eingebracht wird.

19. Verfahren nach Anspruch 1, wobei
das entflammbare Reduktionsmittel durch die Außenröhrenlanze eingebracht wird;
das feste Reduktionsmittel durch die Mittelröhrenlanze eingebracht wird; und
das verbrennungsverbessernde Gas durch die Innenröhrenlanze eingebracht wird.

20. Verfahren nach Anspruch 1, wobei
das verbrennungsverbessernde Gas durch die Außenröhrenlanze eingebracht wird;
das entflammbare Reduktionsmittel durch die Mittelröhrenlanze eingebracht wird; und
das feste Reduktionsmittel durch die Innenröhrenlanze eingebracht wird.

21. Verfahren nach Anspruch 1, wobei
das verbrennungsverbessernde Gas durch die Außenröhrenlanze eingebracht wird;
das feste Reduktionsmittel durch die Mittelröhrenlanze eingebracht wird; und
das entflammbare Reduktionsmittel durch die Innenröhrenlanze eingebracht wird.

## Revendications

1. Procédé de fonctionnement d'un haut-fourneau, le procédé comprenant :
la fourniture d'une lance de tube en trois parties pour injecter des agents réducteurs dans le haut-fourneau par l'intermédiaire d'une tuyère ;
la lance de tube en trois parties comprenant une lance de tube interne, une lance de tube intermédiaire et une lance de tube externe, la lance de tube en trois parties ayant un tube le plus interne, un second tube et un tube le plus externe, la lance de tube interne étant un intérieur d'un tube le plus interne de la lance de tube en trois parties, la lance de tube intermédiaire étant un espace entre le tube le plus interne et le second tube à partir de l'intérieur et la lance de tube externe étant un espace entre le second tube à partir de l'intérieur et le tube le plus externe ; et
l'injection de la totalité d'un agent réducteur solide avec un gaz porteur, d'un agent réducteur inflammable et d'un gaz améliorant la combustion dans le haut-fourneau à travers la lance de tube en trois parties de sorte que chacun de ceux-ci est injecté séparément à travers l'une quelconque de la lance de tube interne, de la lance de tube intermédiaire et de la lance de tube externe, **caractérisé en ce que**
un rapport de la quantité de l'agent réducteur inflammable ou de l'agent réducteur inflammable et du gaz améliorant la combustion à la quantité totale des gaz qui sont injectés à travers la lance de tube en trois parties est de 50 % en volume à 95 % en volume.

2. Procédé selon la revendication 1, dans lequel
l'un quelconque de l'agent réducteur solide et de l'agent réducteur inflammable est injecté à travers la lance de tube externe.

3. Procédé selon la revendication 1 ou 2, dans lequel
chacun de l'agent réducteur inflammable et du gaz améliorant la combustion est injecté à travers l'un quelconque des deux tubes qui sont adjacents l'un à l'autre.

4. Procédé selon l'une quelconque des revendications 1 à 3, dans lequel
l'agent réducteur inflammable et le gaz améliorant la combustion sont injectés à travers l'une quelconque de la lance de tube interne et de la lance de tube intermédiaire.

5. Procédé selon la revendication 1, dans lequel
le gaz améliorant la combustion est de l'oxygène ou de l'air enrichi en oxygène et le gaz améliorant la combustion est injecté à travers l'une quelconque de la lance de tube interne, de la lance de tube intermédiaire et de la lance de tube externe ;
une part de l'oxygène à ajouter à un air de soufflage chaud est injectée à travers l'une quelconque de la lance de tube interne, de la lance de tube intermédiaire et de la lance de tube externe de la lance de tube en trois parties.

6. Procédé selon la revendication 5, dans lequel
le gaz améliorant la combustion est injecté à travers l'une quelconque de la lance de tube interne, de la lance de tube intermédiaire et de la lance de tube externe, le gaz améliorant la combustion est de l'air enrichi en oxygène ;
une part de l'oxygène à ajouter à un air de soufflage chaud est injectée à travers l'une quelconque de la lance de tube interne, de la lance de tube intermédiaire et de la lance de tube externe.

7. Procédé selon la revendication 1, dans lequel
l'agent réducteur solide est du charbon pulvérisé.

8. Procédé selon la revendication 7, dans lequel
l'agent réducteur solide est injecté dans le haut-fourneau en une quantité dans la plage de 50 kg à 300 kg pour 1 tonne de fonte brute.

9. Procédé selon la revendication 8, dans lequel
l'agent réducteur solide est injecté dans le haut-fourneau en une quantité dans la plage de 60 kg à 180 kg pour 1 tonne de fonte brute.

10. Procédé selon l'une quelconque des revendications 7 à 9, dans lequel
des déchets plastiques, des combustibles dérivés de rebuts, des ressources organiques ou des matériaux de déchets sont mélangés au charbon pulvérisé en tant qu'agent réducteur solide.

11. Procédé selon la revendication 10, dans lequel
l'agent réducteur solide est mélangé aux déchets plastiques, aux combustibles dérivés de rebuts, aux ressources organiques ou aux matériaux de déchets tandis que la teneur du charbon pulvérisé en tant qu'agent réducteur solide est définie comme étant de 80 % en masse ou plus.

12. Procédé selon l'une quelconque des revendications 1 à 11, dans lequel
l'agent réducteur inflammable est un gaz de distribution, un gaz naturel, un gaz de propane, de l'hydrogène, un gaz de convertisseur, un gaz de haut-fourneau et un gaz de four à coke.

13. Procédé selon la revendication 12, dans lequel
l'agent réducteur inflammable est injecté dans le haut-fourneau en une quantité dans la plage de 1 kg à 50 kg pour 1 tonne de fonte brute.

14. Procédé selon la revendication 13, dans lequel
l'agent réducteur inflammable est injecté dans le haut-fourneau en une quantité dans la plage de 10 kg à 35 kg pour 1 tonne de fonte brute.

15. Procédé selon l'une quelconque des revendications 1 à 14, dans lequel
le débit total des gaz, qui sont injectés à travers la lance de tube externe de la lance de tube en trois parties, est de 85 Nm³/h à 800 Nm³/h, et
la vitesse d'écoulement à la sortie de la lance de tube externe est de 20 m/s à 120 m/s.

16. Procédé selon la revendication 1, dans lequel
l'agent réducteur solide est injecté à travers la lance de tube externe ;
le gaz améliorant la combustion est injecté à travers la lance de tube intermédiaire ; et
l'agent réducteur inflammable est injecté à travers la lance de tube interne.

17. Procédé selon la revendication 1, dans lequel
l'agent réducteur solide est injecté à travers la lance de tube externe ;
l'agent réducteur inflammable est injecté à travers la lance de tube intermédiaire ; et
le gaz améliorant la combustion est injecté à travers la lance de tube interne.

18. Procédé selon la revendication 1, dans lequel
l'agent réducteur inflammable est injecté à travers la lance de tube externe ;
le gaz améliorant la combustion est injecté à travers la lance de tube intermédiaire ; et
l'agent réducteur solide est injecté à travers la lance de tube interne.

19. Procédé selon la revendication 1, dans lequel
l'agent réducteur inflammable est injecté à travers la lance de tube externe ;
l'agent réducteur solide est injecté à travers la lance de tube intermédiaire ; et
le gaz améliorant la combustion est injecté à travers la lance de tube interne.

20. Procédé selon la revendication 1, dans lequel
le gaz améliorant la combustion est injecté à travers la lance de tube externe ;
l'agent réducteur inflammable est injecté à travers la lance de tube intermédiaire ; et
l'agent réducteur solide est injecté à travers la lance de tube interne.

21. Procédé selon la revendication 1, dans lequel
le gaz améliorant la combustion est injecté à travers la lance de tube externe ;
l'agent réducteur solide est injecté à travers la lance de tube intermédiaire ; et
l'agent réducteur inflammable est injecté à travers la lance de tube interne.
